# EUROPÄISCHE PATENTSCHRIFT

(11) **EP 3 241 810 B1**
(45) Veröffentlichungstag und Bekanntmachung des Hinweises auf die Patenterteilung: **23.01.2019**
(21) Anmeldenummer: 17167374.2
(22) Anmeldetag: 20.04.2017
(51) Int. Cl.: C03C 3/087, C03C 4/20, B65D 85/42, A61J 1/00

(54) **PHARMAPACKMITTEL MIT EINEM CHEMISCH BESTÄNDIGEN GLAS**
PHARMACEUTICAL PACKAGING MEANS WITH A CHEMICALLY RESISTANT GLASS
CONDITIONNEMENT PHARMACEUTIQUE COMPRENANT UN VERRE RÉSISTANT AUX PRODUITS CHIMIQUES

(30) Priorität: 04.05.2016 DE 102016108301; 14.02.2017 DE 102017102900
(43) Veröffentlichungstag der Anmeldung: 08.11.2017
(73) Patentinhaber: Schott AG, 55122 Mainz (DE)
(72) Erfinder: Schwall, Michael, 55116 Mainz (DE); Kass, Christof, 95643 Tirschenreuth (DE); Tratzky, Stephan, 92660 Neustadt an der Waldnaab (DE); Eichholz, Rainer, 60323 Frankfurt (DE); Nass, Peter, 55120 Mainz (DE)
(74) Vertreter: Witte, Weller & Partner Patentanwälte mbB

(56) Entgegenhaltungen:
- US-A- 4 302 250
- US-A1- 2013 101 596
- US-A1- 2014 342 979
- US-A1- 2014 377 525

## Beschreibung

Die Erfindung betrifft ein Pharmapackmittel mit einem chemisch beständigen Glas, das insbesondere als Primärverpackungsmaterial in der Pharmaindustrie geeignet ist.

An solche Pharmapackmittel werden hohe Anforderungen gestellt. Insbesondere eine hohe chemische Beständigkeit ist von Bedeutung. Ferner sollen die hierfür verwendeten Gläser delaminationsfrei sein, d.h. es dürfen sich im Gebrauch keine Schichten aus dem Glas ablösen, die das verpackte Pharmamittel verunreinigen würden. Hauptursache für die Delamination ist das Verdampfen von Alkaliboraten oder Bor- bzw. Alkali-Hydroxiden, während der Heißumformung zu Pharmabehältern. Dies kann grundsätzlich durch Borfreie und Alkali-freie Gläser verhindert werden. Hierbei besteht allerdings grundsätzlich ein Problem darin, dass sich in einem solchen Fall eine deutlich erhöhte Kristallisationsneigung ergibt, was gleichfalls nachteilig ist.

Neben der sehr guten chemischen Beständigkeit werden an Gläser, die als Primärverpackungsmaterial in der Pharmaindustrie geeignet sind, allerdings noch weitere Anforderungen gestellt.

So müssen die Gläser in herkömmlichen Schmelzaggregaten produzierbar sein, d.h. die Viskosität der Schmelze darf nicht zu hoch liegen - möglichst sollte die Verarbeitungstemperatur (Temperatur bei der die Viskosität 10⁴ dPas beträgt, auch als VA oder T4 bezeichnet) den Maximalwert von 1350°C nicht überschreiten. T4 sollte für eine energiesparende Produktion möglichst niedrig liegen.

Aus der EP 0 510 544 A1 sind alkalifreie Gläser mit folgender Zusammensetzung (in Gew.-%) bekannt: 55-65 SiO₂, 10-18 Al₂O₃, 0-3 B₂O₃, 0-3 MgO, 8-15 CaO, 8-15 SrO und 0-3 ZnO. Alle Ausführungsbeispiele enthalten entweder B₂O₃ oder MgO.

Durch die Verwendung von B₂O₃ wird die Delaminationsneigung erhöht, was unvorteilhaft ist für eine Verwendung als Pharmapackmittel. Durch die Zugabe von MgO ergibt sich eine erhöhte Kristallisationsneigung, was gleichfalls nachteilig ist.

Die EP 2 639 205 A1 offenbart alkalifreie Gläser mit folgender Zusammensetzung (in Gew.-%): 58-70 SiO₂, 15,5-20 Al₂O₃, 0-1 B₂O₃, 0-5 MgO, 3,5-16 CaO, 0,5-6,5 SrO und 5-15 BaO. Diese Gläser sollen insbesondere als Display-Gläser anwendbar sein.

Hierbei ist der hohe Gehalt an BaO, der bei allen Beispielen mindestens 5,9 Gew-% beträgt, nachteilig durch die Abgabe von Ba²⁺, was als Schwermetall mit Medikamenten zu Wechselwirkungen führen kann. Ferner führen hohe Gehalte an BaO zu einer erhöhten Dichte, was die Kosten pro Kilogramm erhöht.

Aus der EP 2 650 262 A1 sind alkalifreie Gläser mit folgender Zusammensetzung (in Gew.-%) bekannt: 66-70 SiO₂, 12-15 Al₂O₃, 0-1,5 B₂O₃, mehr als 9,5 und 13 oder weniger MgO, 4-9 CaO, 0,5-4,5 SrO, 0-1 BaO und 0-2 ZrO₂.

Die Verwendung von hohen Anteilen an MgO führt in diesem Glassystem zu einer Erhöhung der Kristallisationsneigung, was bei der Schmelze und insbesondere bei der Heißformgebung Probleme verursacht bzw. die Herstellung von Pharmaverpackungen verhindert.

In der JP 05155638 A werden Gläser mit folgender Zusammensetzung (in Gew.-%) beschrieben, die insbesondere in Verbindung mit Harzen verwendbar sein sollen: 54-62 SiO₂, 8-12 Al₂O₃, 0-5 MgO, 18-22 CaO, 0-5 BaO, 0,5-1,9 TiO₂, 0,5-5 ZnO, 0,6-5,0 ZrO₂ und 0-1 R₂O.

Die Verwendung von kleinen Mengen an Alkalimetalloxiden (R₂O) in allen Ausführungsbeispielen führt zur Bildung von leichtflüchtigen Alkalimetall-Spezies, was zur Erhöhung der Delaminationsneigung führt. Auch MgO ist nachteilig, da dadurch die Kristallisationsneigung erhöht wird. Der verhältnismäßig niedrige Al₂O₃-Gehalt kann zu niedrigen Laugenbeständigkeiten führen.

In der US 2014/0377525 A1 werden im Wesentlichen alkalifreie Gläser mit folgender Zusammensetzung offenbart (in Mol-%): 60-70 SiO₂, 9,5-17 Al₂O₃, 0-9 B₂O₃, 0-8 MgO, 2-15 CaO, 0,1-10 SrO, 0,5-4 BaO, wobei das molare Verhältnis (Cao+SrO+BaO)/Al₂O₃ zwischen 0,6 und 1,0 liegen soll.

Gemäß sämtlicher Ausführungsbeispiele sind größere Anteile an B₂O₃ enthalten, was zu einer Erhöhung der Delaminationsneigung führt, was unvorteilhaft ist für eine Verwendung als Pharmapackmittel. Das gleichfalls in allen Ausführungsbeispielen vorhandene MgO in diesem System führt auch zu einer stärkeren Kristallisationsneigung, was nachteilig für die Heißformgebung ist. Als Vergleichsbeispiele bezeichnete Beispiele offenbaren Gläser mit (in Mol-%) 71,0 bzw. 70,5 SiO₂, 8,9 bzw. 10,4 Al₂O₃, 17,9 bzw. 16,0 CaO, 2,1 bzw. 3,1 BaO, 0,1 bzw. 0,1 SnO₂ und einer Verarbeitungstemperatur von 1297 bzw. 1320 °C.

Aus der WO 2014/196655 A1 sind delaminationsarme Gläser für Pharmaverpackungsmittel mit folgender Zusammensetzung (in Mol-%) bekannt: 69-81 SiO₂, 4-12 Al₂O₃, 0-5 B₂O₃, 0-10 MgO + CaO + SrO +BaO, 5-20 Li₂O + Na₂O + K₂O, 0,1-12 Li₂O.

Sowohl die Verwendung von B₂O₃ als auch der verhältnismäßig hohe Alkalimetalloxid-Gehalt sind Hauptursachen für erhöhte Delamination, was nachteilig für eine Verwendung als Pharmapackmittel ist.

Aus der DE 1 816 391 A1 ist ein Glas mit 59 bis 70 Mol-% SiO₂, 10-20 Mol-% Al₂O₃, 12-28 Mol-% BaO, 0-5 Mol-% CaO, 0-14 Mol-% SrO, 0-5 Mol-% ZnO, 0-3 Mol-% MgO, 0-2 Mol-% B₂O₃ bekannt, das als Hochtemperaturglas eingesetzt wird.

Hierbei ist der hohe Gehalt an BaO nachteilig durch die Abgabe von Ba²⁺, was als Schwermetall mit Medikamenten zu Wechselwirkungen führen kann. Ferner führen hohe Gehalte an BaO zu einer erhöhten Dichte, was die Kosten pro Kilogramm erhöht.

Aus der US 4 012 263 ist ein alkalifreies Glas für die Elektronikindustrie bekannt, das 50-62 Gew.-% SiO₂, 8-14 Gew.-% Al₂O₃, 15,5- 32 Gew.-% BaO, und zumindest CaO oder MgO enthält, wobei CaO 0-25 Gew.-% beträgt und MgO 0-2,4 Gew.-% beträgt.

Wiederum ist hohe Anteil an BaO nachteilig.

Aus der EP 0 048 120 A1 ist ferner ein Hochtemperaturglas für Wolfram-Halogenlampen bekannt, das 64-68 Gew.-% SiO₂, 11-14 Gew.-% CaO, 16,5 bis 18,5 Gew.-% Al₂O₃ und einen Summengehalt an SrO und BaO von 2-6,5 Gew.-% aufweist, wobei SrO 0-4 Gew.-% beträgt und BaO 0-5 Gew.-% beträgt. Es sind auch Ausführungsbeispiele offenbart mit (Angaben in Mol.-%) 71,7 bis 73 SiO₂, 11,1 Al₂O₃, 14,0 bis 17,2 CaO, 0 bis 2,0 SrO und 0 bis 2,0 BaO. Das Glas ist frei von MgO, B₂O₃ und Alkalioxiden. Dieses Glas ist für Hochtemperaturanwendungen vorgesehen.

Aus der US 2013/0101596 A1 sind Gläser für pharmazeutische Behälter bekannt, die besonders delaminationsarm sein sollen. Sie enthalten (Angaben in Mol-%) 70,8 bis 77,4 SiO₂, etwa 5 bis 9 Al₂O₃, etwa 8,5 bis 13,7 Na₂O, etwa 0,1 bis 6,3 MgO, etwa 0,1 bis 5 CaO.

Aus der US 2014/0342979 A1 sind weitere Gläser für pharmazeutische Behälter bekannt, die besonders delaminationsarm sein sollen. Sie enthalten (Angaben in Mol-%) 70,8 bis 77,4 SiO₂ etwa 5 bis 8 Al₂O₃, etwa 8,5 bis 13,7 Na₂O, etwa 0,1 bis 6,3 MgO, etwa 0,1 bis 5 CaO.

Diese Gläser enthalten Magnesiumoxid.

Die Aufgabe der Erfindung besteht darin, ein Pharmapackmittel mit einem Glas zu offenbaren, das eine ausreichende chemische Beständigkeit aufweist, so dass es als Pharmapackmittel, insbesondere als Pharmaprimärverpackungsmaterial, geeignet ist und das in herkömmlichen Schmelzanlagen bei möglichst nicht zu hohen Schmelztemperaturen produzierbar ist.

Die Aufgabe der Erfindung wird durch ein Pharmapackmittel mit einem Glas gelöst, das zumindest die folgenden Bestandteile (in Mol-% auf Oxidbasis) enthält:

| | |
|---|---|
| SiO₂ | 59 - 84 |
| Al₂O₃ | 7 - 18,5 |
| CaO | 1 - 25 |
| SrO | 0 - 6,5 |
| BaO | 0 - 5 |
| ZrO₂ | 0 - 3 |
| TiO₂ | 0 - 5 |
| B₂O₃ | 0 - 1 |

wobei das Verhältnis (CaO+SrO+BaO)/Al₂O₃ < 2,8,
wobei das Verhältnis (CaO+SrO+BaO)/SiO₂ ≤ 0,39,
wobei die hydrolytische Beständigkeit nach DIN ISO 720 Klasse HGA 1 ist,
und wobei das Glas, bis auf unvermeidbare Verunreinigungen, frei von Alkalioxiden und von Magnesiumoxid ist.

Die Aufgabe der Erfindung wird auf diese Weise vollkommen gelöst.

Soweit im Rahmen dieser Anmeldung Zusammensetzungen in der Form angegeben sind, dass darin bestimmte Bestandteile enthalten sind oder dass sie bestimmte Bestandteile aufweisen, sind diese immer so zu verstehen, dass beliebige weitere Bestandteile darin enthalten sein können (offene Zusammensetzung).

In einer weiteren Ausführungsform der Erfindung sind die angegebenen Zusammensetzungen jedoch auch so zu verstehen, dass nur die jeweils angegebenen Bestandteile enthalten sind (geschlossene Zusammensetzung), abgesehen von unvermeidbaren Verunreinigungen, die durch die Natur der Glasherstellung bedingt sind. Je nach der Reinheit der verwendeten Rohstoffe sind solche unvermeidbaren Verunreinigungen auf maximal 1 Mol-%, vorzugsweise auf 0,5 Mol-%, weiter vorzugsweise auf 0,1 Mol-%, oder sogar auf 0,05 Mol-% beschränkt.

Soweit im Rahmen dieser Anmeldung Zusammensetzungen in der Form angegeben sind, dass sie aus bestimmten Bestandteilen bestehen, sind diese Zusammensetzungen immer so zu verstehen, dass darin nur die angegebenen Bestandteile enthalten sind (geschlossene Zusammensetzung), allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Mol-%, vorzugsweise auf 0,5 Mol-%, weiter vorzugsweise auf 0,1 Mol-%, oder sogar auf 0,05 Mol-% beschränkt.

Soweit im Rahmen dieser Anmeldung in Ausführungsbeispielen durch Aufzählung bestimmter Bestandteile angegeben sind, sind diese Angaben als geschlossene Zusammensetzungen zu verstehen, allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Mol-%, vorzugsweise auf 0,5 Mol-%, weiter vorzugsweise auf 0,1 Mol-%, oder sogar auf 0,05 Mol-% beschränkt.

Bei dem erfindungsgemäßen Pharmapackmittel wird durch eine Freiheit von Alkalioxiden und nur geringe Anteile an Boroxid die Delaminationsgefahr deutlich reduziert, was besonders vorteilhaft für eine Anwendung als Pharmapackmittel ist. Durch die Freiheit von Magnesiumoxid wird eine bessere hydrolytische Beständigkeit ermöglicht. Außerdem wird eine erhöhte Kristallisationsneigung vermieden, was zu Problemen bei der Heißformgebung führen würde.

Der geringe Gehalt an Boroxid führt zu einer geringen Delaminationsneigung. Geringe Zusätze von B₂O₃ von mindestens 0,05 Mol.-%, oder mindestens 0,1 Mol.-%, bis zu etwa 1,0 Mol.-%, vorzugsweise bis zu 0,5 Mol-%, können die Schmelzbarkeit verbessern, die Kristallisationsneigung verringern und die chemische Beständigkeit positiv beeinflussen. Auch wird die Hochtemperaturbeständigkeit positiv beeinflusst.

Die hydrolytische Beständigkeit nach DIN ISO 720 liegt bei den erfindungsgemäßen Gläsern in der Klasse HGA 1. Außerdem erlaubt die Viskosität der erfindungsgemäßen Gläser eine Verarbeitung in herkömmlichen Schmelztiegeln, da die Verarbeitungstemperatur T4 maximal 1350 °C beträgt.

Ein Mindestgehalt von 59 Mol-% an SiO₂ ist mit verantwortlich für eine gute chemische Beständigkeit. Ab einem SiO₂-Gehalt von über 84 Mol-% steigt die Verarbeitungstemperatur T4 zu stark an, so dass eine Herstellung in Standard-Schmelzaggregaten nicht mehr möglich ist. Gehalte von 60 bis 70 Mol-% SiO₂ haben sich als besonders vorteilhaft erwiesen, um einerseits eine gute chemische Beständigkeit zu gewährleisten und um andererseits die Verarbeitungstemperatur T4 zu begrenzen.

Ferner ist das Verhältnis von (CaO+SrO+BaO)/SiO₂ mit kleiner oder gleich 0,39 so gewählt, dass maximal ein Ca²⁺, Sr²⁺ oder Ba²⁺-Ion pro zwei [SiO₄]-Einheiten in der Glasstruktur vorhanden ist, damit die M²⁺-Ionen stärker im Netzwerk gebunden sind. Besonders gute Ergebnisse ergeben sich bei einem Verhältnis von (CaO+SrO+BaO)/SiO₂, das größer als 0,25 ist.

Der minimale Gehalt an Al₂O₃ von 7 Mol-% ist so gewählt, dass die Glasstruktur unterstützt und eine hervorragende hydrolytische Beständigkeit erreicht wird. Ferner verbessern Zusätze von Al₂O₃ insbesondere die chemische Beständigkeit im pH-Bereich von 6-14. Insbesondere wird die Schwäche der chemischen Beständigkeit von rein silikatischen Gläsern im pH-Bereich von 8-14 stark verbessert. Der maximale Anteil an Al₂O₃ ist so gewählt, dass die Verarbeitungstemperatur, und somit die Produktionskosten, nicht zu stark steigen, und so dass die Kristallisationsneigung nicht erhöht wird.

Besonders vorteilhafte Ergebnisse ergeben sich, wenn der Gehalt an Al₂O₃ im Bereich von 9 bis 12 Mol-% liegt.

Des Weiteren ist das Verhältnis (CaO+SrO+BaO)/Al₂O₃ mit kleiner 2,8 so gewählt, dass mindestens eine [AlO₄]-Gruppe pro drei M²⁺-Ionen vorhanden ist, wodurch die Mobilität der M²⁺-Spezies verringert wird und eine exzellente hydrolytische Beständigkeit ermöglicht wird. Besonders gute Ergebnisse ergeben sich bei einem Verhältnis von (CaO+SrO+BaO)/Al₂O₃, das kleiner als 2,3 und größer als 1,9 ist.

Die Gläser können ferner 0 bis 3 Mol-% an ZrO₂ enthalten. Hierdurch wird die hydrolytische Beständigkeit bei leicht erhöhten pH-Werten (8-9) stabilisiert, ohne dass die Verarbeitungstemperatur über 1350 °C steigt.

Die erfindungsgemäßen Gläser können ferner 0 bis 4,5 Mol-% TiO₂ enthalten.

TiO₂ kann auch die Funktion von ZrO₂ übernehmen und zur Stabilisierung der Glasstruktur beitragen, indem sich Glasstruktureinheiten von [TiO₃]²⁻ und Ca²⁺ bilden, welche die Mobilität der Ca²⁺-Ionen herabsetzen und damit auch die Auslaugungstendenz. Die Grenze von maximal 5 Mol% ist so gewählt, dass weder die Verarbeitungstemperatur über 1350 °C ansteigt, noch die Entglasungsneigung erhöht wird.

Eine besonders günstige chemische Beständigkeit ergibt sich, wenn der Summengehalt TiO₂+ ZrO₂ mindestens 0,5 Mol-%, vorzugsweise mindestens 0,8 Mol-% beträgt.

Der Summengehalt an TiO₂ + ZrO₂ wird ferner bevorzugt auf höchstens 6 Mol-%, vorzugsweise höchstens 4 Mol-%, weiter bevorzugt höchstens 3 Mol-%, besonders bevorzugt höchstens 2,5 Mol-% begrenzt, da sonst die Kristallisationsneigung und die Verarbeitungstemperatur zu stark ansteigen.

Die erfindungsgemäßen Gläser sind vorzugsweise bis auf unvermeidbare Verunreinigungen frei von Zinkoxid, da dies für Pharmaanwendungen nicht erwünscht ist.

SrO kann zusätzlich in das Glas eingebracht werden, um die Verarbeitungstemperatur durch Unordnung unter 1350 °C zu halten. Zudem erzeugt die geringere Mobilität ein besseres Auslaugungsverhalten. Bevorzugt ist der Gehalt an SrO kleiner als 4 Mol-%, weiter bevorzugt kleiner als 3 Mol-%.

Auch BaO kann zusätzlich in das Glas eingebracht werden, um die Verarbeitungstemperatur durch Unordnung unter 1350 °C zu halten. Die Mobilität von BaO ist noch geringer.

Auf den Einsatz von Bleioxid PbO wird vorzugsweise aus toxikologischen Gründen verzichtet.

Auch wenn im Labormaßstab ohne Zusatz von Läutermitteln blasen- und schlierenfreie Gläser erzielt werden, können die erfindungsgemäßen Gläser 0,01 bis 2 Mol-%, vorzugsweise 0,1 bis 1,5 Mol-% an Läutermitteln für die großtechnische Produktion enthalten.

Durch den Zusatz von Fluorid wird die Viskosität der Schmelze erniedrigt, was die Läuterung beschleunigt. Aus Umweltschutzgründen sollte möglichst auf den Zusatz von As₂O₃ oder Sb₂O₃ verzichtet werden.

Durch die Zugabe von Chloriden oder Fluoriden als Läuterungsmittel wird die Säurebeständigkeit des Glases tendenziell verschlechtert. Außerdem kann eine Zugabe von Chloriden dazu führen, dass bei jeder Erwärmung Chlorid verdampft und anschließend auf den Glasprodukten kondensiert. Eine Zugabe von Fluoriden führt zwar zur Absenkung der Verarbeitungstemperatur T4, jedoch wird hierdurch die chemische Beständigkeit leicht verschlechtert. Auch können sich durch Zusatz von Chlorid Verdampfungs- bzw. Kondensationserscheinungen ergeben. Schließlich kann die Wannenbeständigkeit durch Fluoridzusätze beeinträchtigt werden.

Aus diesem Grunde wird der Zusatz von für Chlorid und Fluorid als Läutermittel auf maximal 1,5 Mol-% Chlorid bzw. Fluorid begrenzt.

Die erfindungsgemäßen Pharmapackmittel eignen sich insbesondere als Primärverpackungsmaterial in der Pharmaindustrie, insbesondere als Flasche, Spritze, Karpule oder Ampulle.

Insbesondere geeignet sind die erfindungsgemäßen Pharmapackmittel zur Herstellung von Glasbehältern, die besonders zur Lagerung von pharmazeutischen Erzeugnissen geeignet sind, da sie in Kontakt mit Wirkstoffen und Puffersystemen chemisch inert sind.

Sie sind somit insbesondere geeignet zur Aufnahme von Wirkstoffen und/oder Pufferlösungen im pH-Bereich 1-11, als auch im pH-Bereich 5-7.

Ferner sind sie zur Aufnahme von Wasser für Injektionszwecke besonders geeignet.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Beispiele

In Tab. 1 sind Gläser für die erfindungsgemäßen Pharmapackmittel nebst ihren wichtigsten Eigenschaften zusammengefasst.

Die Gläser wurden durch Schmelzen üblicher Rohstoffe in einem induktiv beheizten Pt/Rh-Tiegel (Pt20Rh) bei 1650°C erschmolzen. Die Schmelzdauer betrug drei bis vier Stunden. Anschließend wurde die Schmelze zur Homogenisierung eine Stunde bei 1600°C gerührt und danach zwei Stunden bei dieser Temperatur ohne Rühren stehen gelassen, um evtl. vorhandene Blasen zur Oberfläche aufsteigen zu lassen. Die Schmelze wurde mit einer definierten Kühlrate von 30 K/h abgekühlt.

**Tab. 1: Beispiele (Zusammensetzung in Mol-%)**

| Ausführungsbeispiele | B1 | B2 | B3 | B4 | B5 | B6 | B7 | B8 | B9 | B10 | B11 |
|---|---|---|---|---|---|---|---|---|---|---|---|
| SiO₂ | 62,6 | 67,1 | 68,4 | 67,1 | 66,8 | 66,7 | 73,3 | 72,4 | 67,5 | 68,7 | 68,5 |
| Al₂O₃ | 11,0 | 10,3 | 11,3 | 10,3 | 10,3 | 9,7 | 11,9 | 11,6 | 10,4 | 10,6 | 10,9 |
| MgO | 0,0 | 0,0 | 0,0 | 0,0 | 0,0 | 0,0 | 0,0 | 0,0 | 0,0 | 0,0 | 0,0 |
| CaO | 24,4 | 19,9 | 16,0 | 18,8 | 19,8 | 20,7 | 11,9 | 12,7 | 20,0 | 17,4 | 16,3 |
| SrO | 0,0 | 1,6 | 2,2 | 2,2 | 1,9 | 1,9 | 2,0 | 1,0 | 0,0 | 0,0 | 0,0 |
| BaO | 0,0 | 0,0 | 0,0 | 0,0 | 0,0 | 0,0 | 0,0 | 1,5 | 1,1 | 2,2 | 3,5 |
| TiO₂ | 0,0 | 0,0 | 0,0 | 1,6 | 1,2 | 0,4 | 0,4 | 0,0 | 0,0 | 0,0 | 0,0 |
| ZrO₂ | 2,0 | 1,1 | 2,0 | 0,0 | 0,0 | 0,5 | 0,5 | 0,8 | 1,1 | 1,1 | 0,5 |
| B₂O₃ | 0,0 | 0,0 | 0,0 | 0,0 | 0,0 | 0,0 | 0,0 | 0,0 | 0,0 | 0,0 | 0,3 |
| Summe | 100,0 | 100,0 | 100,0 | 100,0 | 100,0 | 100,0 | 100,0 | 100,0 | 100,0 | 100,0 | 100,0 |
| (CaO+SrO+BaO)/Al₂O₃ | 2,2 | 2,1 | 1,6 | 2,0 | 2,1 | 2,3 | 1,2 | 1,2 | 1,9 | 1,6 | 1,8 |
| (CaO+SrO+BaO)/SiO₂ | 0,39 | 0,32 | 0,27 | 0,31 | 0,32 | 0,34 | 0,19 | 0,19 | 0,30 | 0,25 | 0,29 |
| CTE [ppm/K] | 5,15 | 4,84 | 4,49 | 4,87 | 4,87 | 5,03 | 3,82 | 4,02 | 4,82 | 4,61 | 4,7 |
| Tg [°C] | 800 | 803 | 817 | 784 | 783 | 786 | 810 | 824 | 807 | 772 | 790 |
| Dichte [g/cm³] | 2,67 | 2,63 | 2,63 | 2,61 | 2,61 | 2,63 | 2,52 | 2,57 | 2,63 | 2,64 | 2,67 |
| T13 [°C] | 802 | 801 | 820 | 784 | 785 | 789 | 844 | 835 | 802 | 776 | 795 |
| T7,6 [°C] | 965 | 989 | 1015 | 972 | 968 | 968 | 1065 | 1054 | 989 | 984 | 1005 |
| T4 [°C] | 1222 | 1274 | 1311 | 1257 | 1254 | 1250 | 1401 | 1386 | 1276 | 1290 | 1305 |
| ISO 720 [µg Na₂O/g] | 45,9 | 36,5 | 29,1 | 35,7 | 39,2 | 43,3 | 37,7 | 21,6 | 41,8 | 32,4 | 30,0 |
| Klasse ISO 720 | 1 | 1 | 1 | 1 | 1 | 1 | 1 | 1 | 1 | 1 | 1 |

Diese Gläser zeigen durchweg eine gute hydrolytische Beständigkeit und eine Verarbeitungstemperatur T4 unterhalb von 1350 °C, teilweise sogar deutlich darunter. Die Beispiele B7 und B8 liegen außerhalb des beanspruchten Bereiches für die Verarbeitungstemperatur.

Weitere nicht zur Erfindung gehörende Vergleichsbeispiele sind in Tab. 2 zusammengefasst.

In Tab. 2 erfüllen die Beispiele V1-V3 die Randbedingung (CaO+SrO+BaO)/Al₂O₃ < 2,8 nicht, wodurch die hydrolytische Beständigkeit der Gläser nur die Klasse 2 erreicht.

Die Beispiele V1-V4 erfüllen die zweite Randbedingung (CaO+SrO+BaO)/SiO₂ ≤ 0,39 nicht, wodurch auch maximal eine hydrolytische Beständigkeit nach ISO720 der Klasse 2 erreicht werden kann.

**Tab. 2: Vergleichsbeispiele (Zusammensetzung in Mol-%)**

| Vergleichsbeispiele | V1 | V2 | V3 | V4 |
|---|---|---|---|---|
| SiO₂ | 59,1 | 61,0 | 60,7 | 56,0 |
| Al₂O₃ | 9,0 | 8,5 | 7,6 | 16,0 |
| MgO | 5,0 | 5,0 | 5,1 | 9,0 |
| CaO | 25,9 | 24,5 | 25,6 | 18,0 |
| SrO | 0,0 | 0,0 | 0,0 | 0,0 |
| BaO | 0,0 | 0,0 | 0,0 | 0,0 |
| TiO₂ | 0,0 | 0,0 | 0,0 | 0,0 |
| ZrO₂ | 1,0 | 1,0 | 1,0 | 1,0 |
| Summe | 100,0 | 100,0 | 100,0 | 100,0 |
| (CaO+SrO+BaO)/Al₂O₃ | 2,9 | 2,9 | 3,4 | 1,1 |
| (CaO+SrO+BaO))/SiO₂ | 0,44 | 0,40 | 0,42 | 0,32 |
| CTE [ppm/K] | 5,54 | 5,5 | 5,54 | 4,7 |
| Tg [°C] | 760 | 764 | 759 | 788 |
| Dichte [g/cm3] | 2,64 | 2,67 | 2,68 | 2,66 |
| T13 [°C] | 766 | 765 | 762 | 788 |
| T7.6 [°C] | 931 | 933 | 927 | 953 |
| T4 [°C] | 1174 | 1184 | 1175 | 1203 |
| ISO 720 [µg Na₂O/g] | 66,4 | 63,2 | 69,6 | 62,5 |
| Klasse ISO 720 | 2 | 2 | 2 | 2 |

Die erfindungsgemäßen Pharmapackmittel eignen sich insbesondere zur Herstellung von pharmazeutischen Behältnissen, die im Kontakt mit Wirkstoffen und Puffersystemen im pH-Bereich 1-11 chemisch inert sind und deshalb hervorragend zu Lagerung dieser Stoffe verwendet werden können.

Insbesondere sind die pharmazeutischen Behältnisse, hergestellt aus den erfindungsgemäßen Glaszusammensetzungen, zur Lagerung von Wirkstoffen und Pufferlösungen im pH-Bereich 4 - 9 geeignet (z.B. 1 Mol bzw. 8,4% Natriumbicarbonat-Lösung NaHCO3 mit pH-Wert ca. 8).

Besonders sind pharmazeutische Behältnisse, die aus den erfindungsgemäßen Glaszusammensetzungen hergestellt sind, zur Lagerung von Wirkstoffen, Pufferlösungen geeignet im pH-Bereich 5-7 (z.B. (1) 10 mMol Citrat-Puffer pH= 6,0 mit 150 mMol NaCl und 0,005% Tween 20 oder (2) 10 mMol Phosphat-Puffer pH= 7,0 mit 150 mMol NaCl und 0,005% Tween 20), sowie zur Lagerung von Wasser für Injektionszwecke (z.B. Sartorius-Reinstwasser, durch 0,2 µm Filter gespült und mit 18,2 MΩ • cm Widerstand).

## Patentansprüche

1. Pharmapackmittel, insbesondere in Form eines Glasbehälters, insbesondere Flasche, Spritze, Karpule oder Ampulle, mit einem Glas, das zumindest die folgenden Bestandteile (in Mol-% auf Oxidbasis) enthält:
| | |
|---|---|
| SiO₂ | 59 - 84 |
| Al₂O₃ | 7 - 18,5 |
| CaO | 1 - 25 |
| SrO | 0 - 6,5 |
| BaO | 0 - 5 |
| ZrO₂ | 0 - 3 |
| TiO₂ | 0 - 5 |
| B₂O₃ | 0 - 1 |
wobei das Verhältnis (CaO+SrO+BaO)/Al₂O₃ < 2,8 ist,
wobei das Verhältnis (Ca0+SrO+BaO)/SiO₂ ≤ 0,39 ist,
wobei die hydrolytische Beständigkeit nach DIN ISO 720 Klasse HGA 1 ist,
und wobei das Glas, bis auf unvermeidbare Verunreinigungen, frei von Alkalioxiden und von Magnesiumoxid ist, wobei
die Verarbeitungstemperatur T4 vorzugsweise höchstens 1350 °C beträgt.

2. Pharmapackmittel nach Anspruch 1, bei dem das Verhältnis (CaO+SrO+BaO)/Al₂O₃ kleiner als 2,3 ist und vorzugsweise größer als 1,9 ist.

3. Pharmapackmittel nach Anspruch 1 oder 2, bei dem das Verhältnis (CaO+SrO+BaO)/SiO₂ > 0,25 ist.

4. Pharmapackmittel nach einem der vorhergehenden Ansprüche, bei dem der Gehalt an BaO ≤ 3, vorzugsweise ≤ 1,5 ist.

5. Pharmapackmittel nach einem der vorhergehenden Ansprüche, bei dem der Gehalt an Al₂O₃ kleiner als 12 Mol-% ist.

6. Pharmapackmittel nach einem der vorhergehenden Ansprüche, bei dem der Gehalt an Al₂O₃ größer als 9 Mol-% ist.

7. Pharmapackmittel nach einem der vorhergehenden Ansprüche, bei dem der Gehalt an CaO größer als 15 Mol-% ist und vorzugsweise kleiner als 24,5 Mol-% ist.

8. Pharmapackmittel nach einem der vorhergehenden Ansprüche, bei dem der Gehalt an SrO kleiner als 4 Mol-%, vorzugsweise kleiner als 3 Mol-% ist.

9. Pharmapackmittel nach einem der vorhergehenden Ansprüche, bei dem der Summengehalt an TiO₂+ ZrO₂ mindestens 0,5 Mol-%, vorzugsweise mindestens 0,8 Mol-% beträgt.

10. Pharmapackmittel nach einem der vorhergehenden Ansprüche, bei dem der Summengehalt an TiO₂+ZrO₂ höchstens 6 Mol-%, vorzugsweise höchstens 4 Mol-%, weiter bevorzugt höchstens 3 Mol-%, besonders bevorzugt höchstens 2,5 Mol-% beträgt.

11. Pharmapackmittel nach einem der vorhergehenden Ansprüche, bei dem der Gehalt an SiO₂ größer als 60 Mol-% ist, wobei der Gehalt an SiO₂ vorzugsweise kleiner als 70 Mol-% ist.

12. Pharmapackmittel nach einem der vorhergehenden Ansprüche, das mindestens 0,05 Mol.-%, oder mindestens 0,1 Mol.-% an B₂O₃ enthält, bis zu maximal 1,0 Mol.-%, vorzugsweise bis zu 0,5 Mol-%.

13. Pharmapackmittel nach einem der vorhergehenden Ansprüche, bei dem der Gewichtsverlust nach DIN ISO 720 kleiner als 50 µg Na₂O/g ist, vorzugsweise kleiner als 46 µg Na₂O/g, besonders bevorzugt kleiner als 40 µg Na₂O/g ist.

14. Verwendung eines Pharmapackmittels nach einem der vorhergehenden Ansprüche zur Aufnahme eines Wirkstoffes und/oder einer Pufferlösung im pH-Bereich 1-11, oder zur Aufnahme eines Wirkstoffes und/oder einer Pufferlösung im pH-Bereich 5-7, oder zur Aufnahme von Wasser für Injektionszwecke.

## Claims

1. A pharmaceutical packaging, in particular configured as a glass container, in particular a bottle, a syringe, a carpoule or an ampoule, comprising a glass, comprising at least the following components (given in mol-% on oxide basis):
| | |
|---|---|
| SiO₂ | 59 - 84 |
| Al₂O₃ | 7 - 18.5 |
| CaO | 1 - 25 |
| SrO | 0 - 6.5 |
| BaO | 0 - 5 |
| ZrO₂ | 0 - 3 |
| TiO₂ | 0 - 5 |
| B₂O₃ | 0 - 1 |
wherein the ratio (CaO+SrO+BaO)/Al₂O₃ < 2.8,
wherein the ratio (CaO+SrO+BaO)/SiO₂ ≤ 0.39,
wherein the hydrolytic resistance according to DIN ISO 720 is class HGA 1;
and
wherein the glass, apart from unavoidable contaminations, is free of alkali oxides and of magnesium oxide; wherein
the processing temperature T4 is preferably 1350 °C at most.

2. The pharmaceutical packaging of claim 1, wherein the ratio (CaO+SrO+BaO)/Al₂O₃ is smaller than 2.3 and preferably larger than 1.9.

3. The pharmaceutical packaging of claim 1 or 2, wherein the ratio (CaO+SrO+BaO)/SiO₂ > 0.25.

4. The pharmaceutical packaging of any of the preceding claims, wherein the content of BaO ≤ 3, preferably ≤ 1.5.

5. The pharmaceutical packaging of any of the preceding claims, wherein the content of Al₂O₃ is smaller than 12 mol-%.

6. The pharmaceutical packaging of any of the preceding claims, wherein the content of Al₂O₃ is larger than 9 mol-%.

7. The pharmaceutical packaging of any of the preceding claims, wherein the content of CaO is larger than 15 mol-%, and preferably is smaller than 24.5 mol-%.

8. The pharmaceutical packaging of any of the preceding claims, wherein the content of SrO is smaller than 4 mol-%, preferably smaller than 3 mol-%.

9. The pharmaceutical packaging of any of the preceding claims, wherein the total content of TiO₂+ ZrO₂ is at least 0,5 mol-%, preferably at least 0.8 mol-%.

10. The pharmaceutical packaging of any of the preceding claims, wherein the total content of TiO₂+ZrO₂ is 6 mol-% at most, preferably 4 mol-% at most, further preferred 3 mol-% at most, particularly preferred 2.5 mol-% at most.

11. The pharmaceutical packaging of any of the preceding claims, wherein the content of SiO₂ is larger than 60 mol-%, wherein the content of SiO₂ is preferably smaller than 70 mol-%.

12. The pharmaceutical packaging of any of the preceding claims, comprising at least 0.05 mol-%, or at least 0.1 mol-% of B₂O₃, up to a maximum of 1.0 mol-%, preferably up to 0.5 mol-%.

13. The pharmaceutical packaging of any of the preceding claims, wherein the weight loss according to DIN ISO 720 is smaller than 50 µg Na₂O/g, preferably smaller than 46 µg Na₂O/g, particularly preferred smaller than 40 µg Na₂O/g.

14. Use of a pharmaceutical packaging according to any of the preceding claims for receiving an active agent and/or a buffering solution within a pH-region 1-11, or for receiving an active agent and/or a buffering solution in a pH-range 5-7, or for receiving water for injection purposes.

## Revendications

1. Emballage pharmaceutique, notamment sous la forme d'un contenant en verre, notamment d'une bouteille, d'une seringue, d'une cartouche ou d'une ampoule, comprenant un verre qui contient au moins les constituants suivants (en % en moles à base d'oxyde) :
| | |
|---|---|
| SiO₂ : | 59 à 84, |
| Al₂O₃ : | 7 à 18,5, |
| CaO : | 1 à 25, |
| SrO : | 0 à 6,5, |
| BaO : | 0 à 5, |
| ZrO₂ : | 0 à 3, |
| TiO₂ : | 0 à 5, |
| B₂O₃: | 0 à 1, |
avec le rapport (CaO+SrO+BaO)/Al₂O₃ < 2,8,
avec le rapport (CaO+SrO+BaO)/SiO₂ ≤ 0,39,
la résistance hydrolytique selon DIN ISO 720 classe HGA étant de 1,
et le verre étant exempt d'oxydes alcalins et d'oxyde de magnésium, à l'exception des impuretés inévitables,
la température de traitement T4 étant de préférence d'au plus 1 350 °C.

2. Emballage pharmaceutique selon la revendication 1, dans lequel le rapport (CaO+SrO+BaO)/Al₂O₃ est inférieur à 2,3 et de préférence supérieur à 1,9.

3. Emballage pharmaceutique selon la revendication 1 ou 2, dans lequel le rapport (CaO+SrO+BaO)/SiO₂ > 0,25.

4. Emballage pharmaceutique selon l'une quelconque des revendications précédentes, dans lequel la teneur en BaO ≤ 3, de préférence ≤ 1,5.

5. Emballage pharmaceutique selon l'une quelconque des revendications précédentes, dans lequel la teneur en Al₂O₃ est inférieure à 12 % en moles.

6. Emballage pharmaceutique selon l'une quelconque des revendications précédentes, dans lequel la teneur en Al₂O₃ est supérieure à 9 % en moles.

7. Emballage pharmaceutique selon l'une quelconque des revendications précédentes, dans lequel la teneur en CaO est supérieure à 15 % en moles et de préférence inférieure à 24,5 % en moles.

8. Emballage pharmaceutique selon l'une quelconque des revendications précédentes, dans lequel la teneur en SrO est inférieure à 4 % en moles, de préférence inférieure à 3 % en moles.

9. Emballage pharmaceutique selon l'une quelconque des revendications précédentes, dans lequel la teneur totale en TiO₂ + ZrO₂ est d'au moins 0,5 % en moles, de préférence d'au moins 0,8 % en moles.

10. Emballage pharmaceutique selon l'une quelconque des revendications précédentes, dans lequel la teneur totale en TiO₂ + ZrO₂ est d'au plus 6 % en moles, de préférence d'au plus 4 % en moles, de manière davantage préférée d'au plus 3 % en moles, de manière particulièrement préférée d'au plus 2,5 % en moles.

11. Emballage pharmaceutique selon l'une quelconque des revendications précédentes, dans lequel la teneur en SiO₂ est supérieure à 60 % en moles, la teneur en SiO₂ étant de préférence inférieure à 70 % en moles.

12. Emballage pharmaceutique selon l'une quelconque des revendications précédentes, qui contient au moins 0,05 % en moles, ou au moins 0,1 % en moles de B₂O₃, jusqu'à au plus 1,0 % en moles, de préférence jusqu'à 0,5 % en moles.

13. Emballage pharmaceutique selon l'une quelconque des revendications précédentes, dans lequel la perte de poids selon DIN ISO 720 est inférieure à 50 µg de Na₂O/g, de préférence inférieure à 46 µg de Na₂O/g, de manière particulièrement préférée inférieure à 40 µg de Na₂O/g.

14. Utilisation d'un emballage pharmaceutique selon l'une quelconque des revendications précédentes pour la réception d'un agent actif et/ou d'une solution tampon dans la plage de pH allant de 1 à 11, ou pour la réception d'un agent actif et/ou d'une solution tampon dans la plage de pH allant de 5 à 7, ou pour la réception d'eau à des fins d'injection.
